# EUROPEAN PATENT APPLICATION

(11) **EP 1 967 937 A1**
(43) Date of publication of application: **10.09.2008**
(21) Application number: 07103630.5
(22) Date of filing: 06.03.2007
(51) Int. Cl.: G06F 1/16

(54) **A display unit, a method and a computer program product**

(71) Applicant: Polymer Vision Limited, 5656 AE Eindhoven (NL)
(72) Inventor: Huitema, Hjalmar Edzer Ayco, 5501 CK Veldhoven (NL); van Lieshout, Petrus Johannes Gerardus, 5741 EA Beek en Donk (NL); Hamers, Johannes Cornelis Adriaan, 5694 CK Breugel (NL)
(74) Representative: van Loon, C.J.J.

(57) **Abstract**

The invention relates to a display unit comprising a flexible display having a depicting side for depicting visual information. The flexible display is deformable between a storage state wherein the flexible display is in a deformed position, and a depicting state wherein the depicting side of the flexible display is substantially flat, visible from an exterior point of view and it is possible to control visual information content on the depicting side. Further, the display unit is arranged such that the flexible display is deformable between the storage state and the depicting state to at least one additional state wherein a part of the depicting side of the flexible display is substantially flat, visible from the exterior point of view and it is possible to control visual information content on that part of the depicting part.

## Description

The invention relates to a display unit comprising a flexible display having a depicting side for depicting visual information, the flexible display being deformable between a storage state wherein the flexible display is in a deformed position, and a depicting state wherein the depicting side of the flexible display is substantially flat, is visible from an exterior point of view and it is possible to control the visual information content on the depicting side.

Patent publication WO 2006/061786 discloses a flexible display on which visual information, e.g. e-mail messages, can be depicted. The display can be deformed between two states, viz. the depicting state for reading the display and the storage state for storing the display. In the depicting state the depicting side of the display is substantially flat, is visible from an exterior point of view with respect to the display unit and it is possible to control the content of the depicting side, so that a user can read information that is depicted on the display. In the storage state, the flexible display has been deformed to a compact volume, e.g. by rolling or wrapping the display and can be protected against external mechanical influences. If the depicting side of the flexible display is substantially inwardly oriented, in the storage state, that side is invisible from the exterior point of view.

However, for viewing information shown by the display unit on an active way, the flexible display has to be deformed from the storage state to the depicting state which is not convenient for a user who wants to regularly check information of the display unit, such as status information of a device or whether new messages have been received by a mobile device.

It is an object of the invention to provide a display unit according to the preamble wherein a user can more readily check information of the display.

According to a first aspect of the invention, there is provided a display unit comprising a flexible display having a depicting side for depicting visual information, the flexible display being deformable between a storage state wherein the flexible display is in a deformed position, and a depicting state wherein the depicting side of the flexible display is substantially flat, is visible from an exterior point of view and it is possible to control visual information content on the depicting side, wherein the display unit is further such arranged that the flexible display is deformable between the storage state and the depicting state to at least one additional state wherein a part of the depicting side of the flexible display is substantially flat, is visible from the exterior point of view and it is possible to control visual information content of that part on the depicting side.

According to a second aspect of the invention, there is provided a display unit comprising a flexible display having a depicting side for depicting visual information, the flexible display being deformable between a storage state wherein the flexible display is in a deformed position and a depicting state wherein the depicting side of the flexible display is substantially flat, visible from an exterior point of view and it is possible to control the visual information content on the depicting side, the unit further comprising a projector for at least partially projecting the depicting side of the flexible display to a substantially transparent part of the display unit that is visible from the exterior point of view.

The invention is based on the inventive insight to depict information on a depicting side of the flexible display that is visible from the exterior point of view when the flexible display is not in the depicting state, so that a user of the display unit according to the invention does not need to deform the flexible display from the storage state entirely to the depicting state, thereby saving time for deforming the display. The user can thus have in a convenient way a fast view on information of the display unit though the flexible display is not in the depicting state. Further, the life time of the display unit is lengthened, as the number of actions to deformation the flexible display towards the depicting state is reduced.

In a first embodiment, the flexible display is deformable to at least one additional state between the storage state and the depicting state, in the at least one additional state a part of the depicting side of the flexible display being substantially flat, is visible from the exterior point of view and it is possible to control visual information content on that part of the depicting side. By controlled depicting visible information in the at least one additional state, a user of the unit can retrieve visible information quickly by a reduced deformation action of the flexible display from the storage state.

In a second embodiment, the display unit further comprises a projector for at least partially projecting the depicting side of the flexible display to a substantially transparent part of the display unit that is visible from the exterior point of view. By introducing the substantially transparent part of the display unit and the projector, visible information can advantageously be shown to a user, even when the flexible display is not in the depicting state, but in another state, such as the storage state or the at least one additional state. By projecting the visible information on the substantially transparent part, a user does not need to deform the flexible display at all, e.g. for a fast information view, thereby further improving an information check performance of the display unit. As overall less deformation actions of the flexible display have to be performed, also the life time of the display unit further extends. In addition, a yet further display that is always visible is not required anymore.

According to a third aspect of the invention, there is provided a method of depicting information on a depicting side of a flexible display of a display unit, the flexible display being deformable between a storage state wherein the flexible display is in a deformed position, and a depicting state wherein the depicting side of the flexible display is substantially flat, visible from an exterior point of view and it is possible to control the visual information content on the depicting side, the method comprising the step of depicting information on only a part of the depicting side of the flexible display when the flexible display has been deformed to an additional state between the storage state and the depicting state.

According to a fourth aspect of the invention, there is provided a method of depicting information on a depicting side of a flexible display of a display unit, the flexible display being deformable between a storage state wherein the depicting side of the flexible display is in a deformed position, and a depicting state wherein the depicting side of the flexible display is substantially flat, visible from an exterior point of view and it is possible to control the visual information content on the depicting side, the method comprising the step of at least partially projecting the depicting side of the flexible display to a substantially transparent part of the display unit that is visible from the exterior point of view.

According to a fifth aspect of the invention, there is provided a computer program product comprising computer readable code causing a computer to perform a method of depicting information on a depicting side of a flexible display of a display unit, the flexible display being deformable between a storage state wherein the flexible display is in a deformed position and a depicting state wherein the depicting side of the flexible display is substantially flat, visible from an exterior point of view and it is possible to control the visual information content on the depicting side, the method comprising the step of depicting information on only a part of the depicting side of the flexible display when the flexible display has been deformed to an additional state between the storage state and the depicting state.

According to a sixth aspect of the invention, there is provided a computer program product comprising computer readable code causing a computer to perform a method of depicting information on a depicting side of a flexible display of a display unit, the flexible display being deformable between a storage state wherein the flexible display is in a deformed position, and a depicting state wherein the depicting side of the flexible display is substantially flat, visible from an exterior point of view and it is possible to control the visual information content on the depicting side, the method comprising the step of at least partially projecting the depicting side of the flexible display to a substantially transparent part of the display unit that is visible from the exterior point of view.

In order that the invention may be more fully understood, embodiments thereof will now be described by way of example only, with reference to the figures in which:
Figure 1 shows a schematic perspective view of a first embodiment of a display unit according to the invention;
Figure 2 shows a schematic perspective view of a second embodiment of a display unit according to the invention;
Figure 3a shows a simplified schematic plan view of the display unit of Figure 2 in a storage state;
Figure 3b shows a simplified schematic plan view of the display unit of Figure 2 in an intermediate state;
Figure 3c shows a simplified schematic plan view of the display unit of Figure 2 in a depicting state;
Figure 4 shows a further schematic plan view of the display unit of Figure 3b;
Figure 5 shows a yet further schematic plan view of the display unit of Figure 3b;
Figure 6 shows a further schematic plan view of the display unit of Figure 3b;
Figure 7a shows a cross sectional side view of a further embodiment of the display unit according to the invention;
Figure 7b shows a top view of the display unit of Figure 7a; and
Figure 7c shows a cross sections side view of a further embodiment of the display unit according to the invention.

The figures are merely schematic views of preferred embodiments according to an embodiment of the invention. In the figures, the same reference numbers refer to equal or corresponding parts.

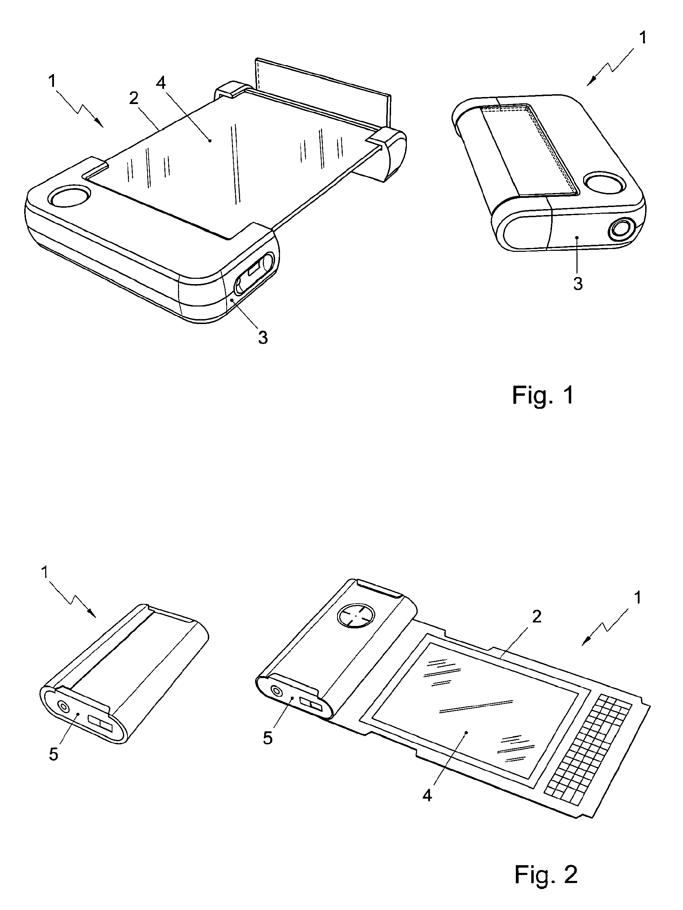

Figure 1 shows a schematic perspective view of a first embodiment of a display unit 1 according to the invention having a flexible display 2 that is rollable around a cylinder that is arranged inside a housing 3 of the display unit 1. On the left hand side, a depicting state of the flexible display 2 is shown wherein a depicting side 4 of the display is substantially flat, visible from an exterior point of view with respect to the display unit 1 and the visual information content on the depicting side is controlled by a display controller (not shown). In the depicting state of the flexible display 2, the display 2 is substantially flat e.g. supported by one or more telescoping supporters. On the right hand side, a storage state is shown wherein the display 2 is deformed, in this embodiment substantially entirely rolled around the cylinder, so that the depicting side of the flexible display is substantially inwardly oriented and thus invisible from the exterior point of view. Normally, in the storage, in-operative state, the unit 1 is switched off or in a stand by modus.

It is noted that the flexible display 2 can also be implemented rollable otherwise, e.g. around an external cylinder. It is further noted that with the expression 'inwardly oriented' is meant that the normal vector of the surface points to the interior of the display unit. Finally, it is noted that on alternative way the flexible display can be rolled with the depicting side substantially outwardly oriented.

Figure 2 shows a schematic perspective view of a second embodiment of a display unit 1 according to the invention having a flexible display 2 that is wrappable with respect to a kernel 5 of the unit 1. On the right hand side, the unit 1 is shown in the depicting state of the flexible display 2, while on the left hand side, the unit 1 is shown in the storage state of the flexible display 2. In the depicting state of the flexible display 2, the display 2 is substantially flat e.g. supported by one or more pivoting supporters.

The display unit 1 shown in Figures 1 and 2 can be used in mobile devices, such as mobile telephones, PDA's etc. The flexible display 2 comprises e.g. an electrophoretic display, also known as E Ink which is a trademark of E Ink Corporation, Cambridge, USA. Electrophoretic displays are known from the prior art, e.g. from patent publication US2007/0018944 A1, which is incorporated herein by reference.

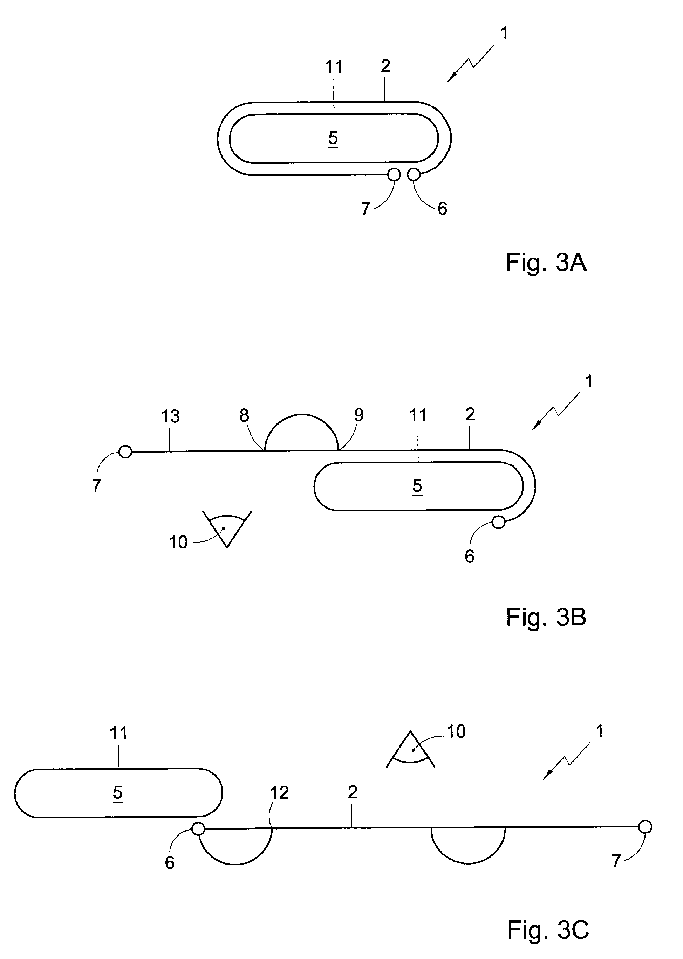

Figure 3a, 3b, 3c show a simplified schematic plan view of the display unit 1 of Figure 2 in the storage state, the depicting state, and an additional state, also called an intermediate state, respectively, of the flexible display 2. In the storage state, the depicting side 4 of the flexible display 2 is oriented inwardly towards the kernel 5 of the display unit 1 and thereby invisible from an exterior point of view. The kernel is provided with a user interface 11. The flexible display 2 having a first end 6 and a second end 7 makes a complete turn around the kernel 5. In principle, however, the display 2 may also enclose the kernel 5 twice or more. Further, the display 2 may surround the kernel 5 partially.

In the intermediate state, shown in Figure 3b, the flexible display 2 is deformed from the storage state by a partial unwrapping action. In particular, a first curve section between curve end points 8 and 9 has been flattened. Thereby, in the intermediate state, a depicting side of a section 13 of the display 2 adjacent to the second end is flat, visible from a point of view 10 exterior to the display unit 1 and visual information content is controlled by a display controller (not shown). In principle, more that one additional intermediate state of the flexible display 2 can be provided.

In the depicting state, shown in Figure 3c, the flexible display 2 is further deformed by an additional unwrapping action. In particular, a second curve section between a curve end point 12 and the first end of the flexible display 2 has been flattened, so that substantially the entire depicting side of the flexible display 2 is flat, visible from the exterior point 10 and visual information content is controlled by the display controller.

Preferably, the display unit 1 is arranged such that the flexible display 2 is more or less secured in the intermediate state to provide a stable mechanical state of the unit 1. Thereto, the unit further comprises a stabilizer for enabling a stable mechanical position of the flexible display after deformation to the at least one additional operating state. It is noted that a corresponding rollable display can also be arranged such that the intermediate state is more or less stable, e.g. by providing more or less telescoping supporters having an intermediate stable position.

The additional state is for use in crowded environments and for having a good grip on the unit 1. Possible applications, that can be used in the intermediate, partial unwrapped state, are consulting sms and/or e-mail messages, phone contact list, and mp3 play list and volume control.

The display 2 comprises rigid and flexible sections to facilitate deformation of the display 2. In particular, the curved sections of the flexible display 2 in Figure 3A are flexible. However, also flat sections of the display 2 in Figure 3A can be manufactured from flexible display material.

Curve end points 8, 9, 12 are provided with a deformation detector for detecting the deformation of the flexible display 2 to the at least one additional state and for generating a detecting signal. By providing a deformation detector the state of the flexible display 2 can be determined, especially which depicting side area of the display 2 is visible from the exterior point 10.

Optionally, the display unit further comprises a display processor that is arranged to control visual information adapted for the at least one additional state of the flexible display 2. In particular, the display processor is arranged to control visual information on a substantially flat and visible part of the flexible display 2 from the exterior point 10 in response to a detecting signal of the orientation detector. In this way, the visual information is automatically shown on the visible part of the display 2 after performing the first unwrapping action. Alternatively, the visual information is shown on the visible part upon an additional user action, e.g. via a user interface.

It is noted that the process of depicting the visual information can be caused by hardware components and/or by software.

Further, the deformation detectors can be provided with lock and/or unlock functionality or another appropriate user interface action, such as page up/page down, see below.

The deformation detectors can each be implemented in various manners, among others as a:
(i) Hall sensor generating a signal proportional to the distance of magnet to the sensor when the magnet is close enough. The sensor can typically be integrated in the border edge around the display 2;
(ii) potential meter integrated in the curving zones in order to detect the position of the curving zone by a resistance measurement circuit, being an analogue measurement of the curving state of a flexible section and can optionally also be used to detect intermediate states during (un)wrapping actions;
(iii) light sensor detecting if a part of the display is unwrapped, being a typical digital measurement integrated in the border edge of the display;
(iv) pull strip or piezo element, the 'pull strip' changing its resistance depending on the strain (elongating or compressive) exerted on the strip. The strip can be integrated in the curved sections of the display 2. The piezo element works in a similar manner;
(v) reed relais being a digital switch that can be switched by a magnetic field. The reed relais can be integrated in the border edge of the display 2.

As a result, the deformation detectors can comprise an electronic measurement sensor and/or a magnetic field sensor.

In Figure 3b, the user interface 11 is still covered by the part of the display 2 that is wrapped and cannot be used. This can be solved by adding limited user interface functionality on the other side of the device body or on the top and/or bottom of the display unit 1. The limited user interface could specifically be designed for operating the display unit in its partially unwrapped state, the additional operative state.

In terms of functionality, a simple user interface can be added on the kernel 5 that is brought in the partially unwrapped state. This user interface can be dedicated for use of the partially unwrapped display part. As an example, it can be a simple four-way button that can be used to scroll through item lists on the display.

Further, in terms of functionality, a keyboard can be added. This is in particular advantageous as the unit in its partially unwrapped state is an ideal configuration for typing as the user can hold the unit in this configuration in an easy way in on or both hands. This would make the partially unwrapped state the 'typing mode' of the unit and the completely unwrapped state the 'reading mode'. The applications could be configured in such a way that they automatically switch to the typing mode when the user switches to the partially unwrapped state. For example, when reading e-mail, going the partially unwrapped state automatically triggers the reply action. The same can be done in the sms application. The keyboard can also contain four navigation keys for navigation to an on-screen list of items.

In general, user interface elements can be located on a front and/or back surface of the flexible display, on or opposite to the depicting side, on side sections, on a top and/or on a bottom section of the display unit 1.

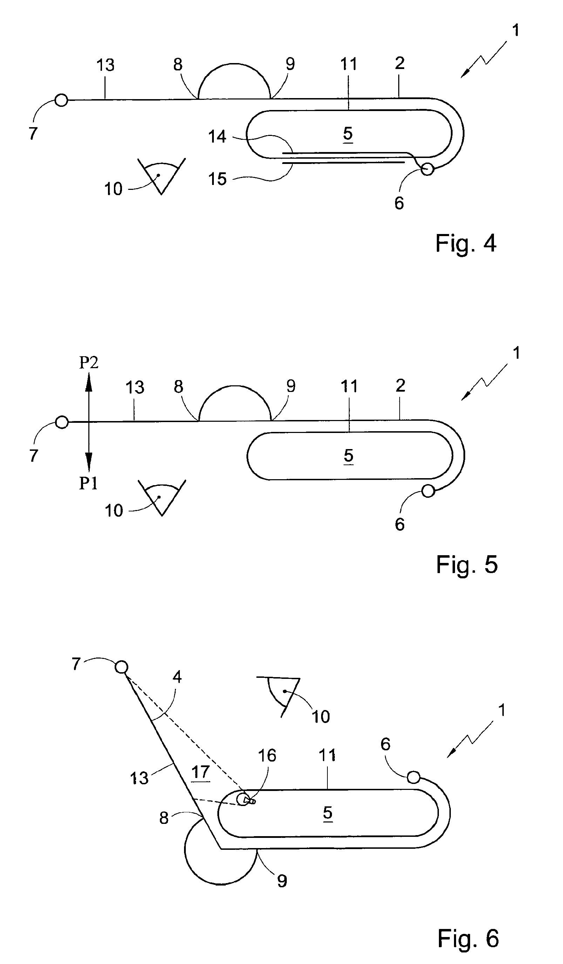

Practically, a user interface can be implemented by adding a display 14 with touch screen 15 to the unwrapped part of the device body, as shown in Figure 4. In this way a reconfigurable user interface can be created that can be configured as a keyboard and/or as navigation keys. One implementation that would be ideal is to use the same display foil both for the wrapping part and for the reconfigurable user interface display part.

As a further option, a wrap / unwrap action can also be used for interacting with the display 2. Especially the partially unwrapped state is ideal for this kind of interaction as only one curved section between curve end points 8, 9 is in principle free to pivot in that state. Moving the free display end 7 towards the wrapped state P1 by a certain number of degrees can, for example, be the page down action; moving the free display end the other way P2 can, for example, be the page up action, as shown in Figure 5. Obviously, the functionality can also be implemented vice versa. Further, other user interface functionality can be implemented. The curved section can be constructed in such a way that flexing up and down is possible, while still having a good stable position in the flat state. The 'overstretch' possibility of the curved section and the display could also be beneficial for the reliability of the unit 1. This is similar to the way in which eyeglasses are constructed.

In the partially unwrapped state, optionally a front light can be used, e.g. for use of the unit 1 during poor lighting conditions. In Figure 6, such a configuration is shown. The orientation of the free display section 13 is not parallel with the longitudinal axis of the kernel 5, but tilted. Preferably, the curved section between curved end points 8, 9 has an additional stable (clicking) position in the tilted state. The kernel 5 is provided with a light source 16 to illuminate the depicting side 4 of the free display end 13. As an option, the direction of the light beam 17 generated by the light source 16 can be adjusted according to the tilt angle of the free display end 13 with respect to longitudinal axis of the kernel. Here, a potential meter arranged in the curved section between curved end points 8, 9 can be used.

In the intermediate state of the flexible display 2, a part of the depicting side, e.g. half of it, is not externally visible and therefore does not need to be updated by the unit 1. In general, the display comprises matrix pixels that are activated by column and row electrodes. Depending on the orientation, only a part of the column or row electrodes has to be used to show the visual information on the visible part of the display. Preferably, the visible part of the display is operated by a main display control processor, while the non-visible part of the display is operated by a separate display control processor, so that the separate display control processor can be switched off or turned to a zero volt state, thereby saving energy. After deforming the display in the depicting, the separate display control processor can be initialized for normal operation. Further, the amount of data that has to be sent to the display control processors is much less when only a part of the display has to be updated. This will also conserve energy.

It is noted that on alternative way the flexible display 2 can be wrapped with the depicting side substantially outwardly oriented with respect to the kernel 5 of the unit 1 with the same advantages of the additional state.

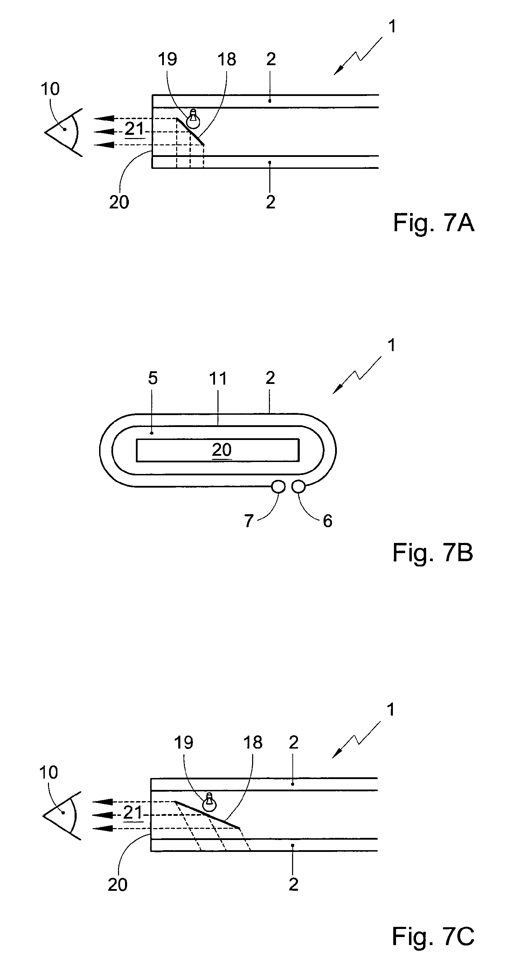

In Figure 7a a cross sectional side view of a further embodiment of the display unit according to the invention is shown. A part of the depicting side of the flexible display is projected at the top and/or the bottom of the device on a substantially transparent part of the display unit 21 that is visible from an exterior point of view. The substantially transparent is implemented as an additional display 20. A light beam 21 is visible from an exterior point of view 10. The projection of the part of the depicting side of the flexible display 2 is performed by a projector comprising a mirror 18. The additional display 20 is substantially transverse with respect to the partially projected depicting side of the flexible display. One of the advantages of this embodiment is that at least part of the depicting side of the flexible display is visible from an exterior point of view 10 when the flexible display 2 is not in the depicting state, e.g. in an intermediate state as described above. Moreover, in a very advantageous way, the display unit can also be arranged such that at least part of the depicting side of the flexible display is visible from an exterior point of view 10, even when the flexible display 2 is in the storage state. Thereby, the lifetime of the display unit is even more extended as the flexible display needs not be deformed for at least a number of viewing actions of a user. Thus, the display unit 1 can also be operative when the flexible display 2 is in its fully wrapped, storage position. Figure 7b shows a top view of the display unit of Figure 7a, clearly illustrating the additional display 20. It is noted that the substantially transparent part of the display unit can also be implemented otherwise, e.g. merely as a transparent element.

Optionally, a light source 19 can be added that creates a front light for the projected part of the display. The light source 19 might generate coloured or substantially white light. In Figure 7a, the light source 19 is located behind the mirror 18 as shown from the exterior point of view 10. It is advantageous in this configuration that the mirror then is transparent for the light coming from the light source 19. Alternatively, the light source 19 can be positioned in the top of the display unit 1, near the additional display, in Figure 7a on the left-hand side of the mirror 18. In that case the mirror 18 can be transparent, or non-transparent. However, the light source 19 is in the latter case preferably shielded from the exterior point of view 10 in order to prevent light to directly propagate towards the exterior point of view 10. In principle, the light source 19 can also be combined with light sources that are already present for a user feedback in a user interface.

The additional display, that can be used as a preview screen, can be combined with a button functionality by making a button transparent. Alternatively a color filter, touch functionality of any other added feature could be added to the additional display that can be used for previewing actions.

In Figure 7a, the mirror 18 is oriented in a plane intersecting the depicting side of the flexible display 2, i.e. the mirror 18 is oriented at an angle of approximately 45° with respect to the local orientation of the flexible display 2. The mirror 18 than projects a part of the depicting side of the display 2 towards an exterior point of view 10 via the additional display 20. In Figure 7c showing a further embodiment of the display unit 1 according to the invention, the mirror is oriented at an angle smaller than approximately 45° with respect to the local orientation of the flexible display 2, thereby obtaining a projection in the additional display 20 having a higher resolution in one dimension.

It is noted that on alternative way the mirror can be oriented at an angle larger than approximately 45° with respect to the local orientation of the flexible display 2 or the angle can be adjusted by means of a button on the display unit 1, thus enabling a kind of zoom function.

Advantageously, the display unit 1 further comprises a processor that is arranged to depict visual information on the part of the depicting side of the flexible display 2 that is projected to the additional display 20, so that energy might be saved. The depicted and projected visual information might comprise e.g. on/off status of applications, receipt of SMS messages, etc.

By the embodiment of the display unit 1 shown in Figures 7a-c, a user is offered new ways of interacting with the display unit 1, in particular if user interface actions are coupled to a partial unwrap action and the user gets lighting, touch and/or color functionality on the additional display 20.

While specific embodiments have been described above, it will be appreciated that the invention may be practiced otherwise than as described. The description is not intended to limit the invention. Any reference signs in the claims shall not be construed as limiting the scope.

## Claims

1. A display unit comprising a flexible display having a depicting side for depicting visual information, the flexible display being deformable between a. storage state wherein the flexible display is in a deformed position, and a depicting state wherein the depicting side of the flexible display is substantially flat, is visible from an exterior point of view and it is possible to control visual information content on the depicting side, wherein the display unit is further such arranged that the flexible display is deformable between the storage state and the depicting state to at least one additional state wherein a part of the depicting side of the flexible display is substantially flat, is visible from the exterior point of view and it is possible to control visual information content of that part on the depicting side.

2. A display unit according to claim 1, further comprising a deformation detector for detecting the deformation of the flexible display to the at least one additional state and for generating a detecting signal.

3. A display unit according to claim 2, further comprising a processor that is arranged to control the visual information content adapted for the at least one additional state of the flexible display.

4. A display unit according to claim 2 or 3, wherein the deformation detector comprises an electronic measurement sensor and/or a magnetic field sensor.

5. A display unit according to any previous claim, further comprising a stabilizer for enabling a stable mechanical position of the flexible display after deformation to the at least one additional state.

6. A display unit according to any of the claim 2-5, wherein the deformation detector further has a user interface functionality, e.g. that the display unit is arranged such that upon a detection of a movement in a direction of the storage state or depicting state, a user interface functionality is activated.

7. A display unit according to any previous claim, further comprising a user interface, such as a key board, a four way button and/or a touch screen, that is implemented separately or integrated with the flexible display.

8. A display unit according to claim 7, wherein in the at least one additional state the user interface is covered and in the depicting state the user interface is uncovered by the flexible display.

9. A display unit according to claim 7 or 8, wherein the user interface is dedicated for use in the at least one additional state of the flexible display.

10. A display unit comprising a flexible display having a depicting side for depicting visual information, the flexible display being deformable between a storage state wherein the flexible display is in a deformed position and a depicting state wherein the depicting side of the flexible display is substantially flat, visible from an exterior point of view and it is possible to control the visual information content on the depicting side, the unit further comprising a projector for at least partially projecting the depicting side of the flexible display to a substantially transparent part of the display unit that is visible from the exterior point of view.

11. A display unit according to claim 10, wherein the projector comprises a mirror which is oriented in a plane intersecting the partially projected depicting side of the flexible display with an angle of approximately 45°.

12. A display unit according to claim 10, wherein the projector comprises a mirror which is oriented in a plane intersecting the partially projected depicting side of the flexible display with an angle deviating from 45°.

13. A display unit according to claim 10, wherein the projector comprises a mirror which is oriented in a plane intersecting the partially projected depicting side of the flexible display with an adjustable angle for enabling a zoom function in the projection.

14. A display unit according to any previous claim, further comprising a processor that is arranged to depict visual information content on the part of the depicting side of the flexible display that is projected to the substantially transparent part of the display unit.

15. A display unit according to any previous claim, wherein the flexible display is wrappable and/or rollable.

16. A method of depicting information on a depicting side of a flexible display of a display unit, the flexible display being deformable between a storage state wherein the flexible display is in a deformed position, and a depicting state wherein the depicting side of the flexible display is substantially flat, visible from an exterior point of view and it is possible to control the visual information content on the depicting side, the method comprising the step of depicting information on only a part of the depicting side of the flexible display when the flexible display has been deformed to an additional state between the storage state and the depicting state.

17. A method of depicting information on a depicting side of a flexible display of a display unit, the flexible display being deformable between a storage state wherein the depicting side of the flexible display is in a deformed position, and a depicting state wherein the depicting side of the flexible display is substantially flat, visible from an exterior point of view and it is possible to control the visual information content on the depicting side, the method comprising the step of at least partially projecting the depicting side of the flexible display to a substantially transparent part of the display unit that is visible from the exterior point of view.

18. A computer program product comprising computer readable code causing a computer to perform a method of depicting information on a depicting side of a flexible display of a display unit, the flexible display being deformable between a storage state wherein the flexible display is in a deformed position and a depicting state wherein the depicting side of the flexible display is substantially flat, visible from an exterior point of view and it is possible to control the visual information content on the depicting side, the method comprising the step of depicting information on only a part of the depicting side of the flexible display when the flexible display has been deformed to an additional state between the storage state and the depicting state.

19. A computer program product comprising computer readable code causing a computer to perform a method of depicting information on a depicting side of a flexible display of a display unit, the flexible display being deformable between a storage state wherein the flexible display is in a deformed position, and a depicting state wherein the depicting side of the flexible display is substantially flat, visible from an exterior point of view and it is possible to control the visual information content on the depicting side, the method comprising the step of at least partially projecting the depicting side of the flexible display to a substantially transparent part of the display unit that is visible from the exterior point of view.
